# EUROPEAN PATENT APPLICATION

(11) **EP 4 796 983 A1**
(43) Date of publication of application: **26.08.2026**
(21) Application number: 26159279.4
(22) Date of filing: 18.02.2026
(51) Int. Cl.: G02C 7/08, G02B 27/00, G02C 11/00, G06F 3/01, G02B 3/14

(54) **SYSTEMS AND METHODS FOR ADAPTIVE VIEWING**

(30) Priority: 24.02.2025 FI 20250014
(71) Applicant: IXI Eyewear Oy, 02150 Espoo (FI)
(72) Inventor: Sjöholm, Annika, 02200 Espoo (FI); Konttila, Antti, 90800 Oulu (FI); Miettinen, Ville, 00100 Helsinki (FI); Lehmuskallio, Harri, 00100 Helsinki (FI); Melakari, Rebecca, 02140 Espoo (FI); Eiden, Niko, 02630 Espoo (FI); Melakari, Klaus, 02140 Espoo (FI); Rainisto, Roope, 00730 Helsinki (FI); Yliluoma, Timo, 00580 Helsinki (FI)
(74) Representative: Moosedog Oy

(57) **Abstract**

Disclosed is an adaptive viewing system (100) comprising: an eyewear (102) with adaptive optical element(s) (104a-b); a depth-sensing camera (106); and processor(s) (108) configured to: determine a gaze depth (118) of a user (114) wearing the eyewear; detect a first gaze depth transition, wherein the first gaze depth transition is detected when the gaze depth changes from being equal to or greater than a predefined threshold to being less than the predefined threshold; adjust a drive signal for the adaptive optical element(s) by applying a first drive signal transition when the first gaze depth transition is detected, to produce first optical power(s) in the adaptive optical element(s), wherein the first optical power(s) is/are determined based on the gaze depth that is less than the predefined threshold; and control the adaptive optical element(s) using corresponding drive signal(s).

## Description

### TECHNICAL FIELD

The present disclosure relates to adaptive viewing systems. The present disclosure also relates to methods for adaptive viewing.

### BACKGROUND

Presbyopia is an age-related visual condition in which the eye gradually loses its ability to focus on nearby objects. Users affected by presbyopia typically experience difficulty when performing near-vision tasks such as reading, viewing handheld electronic devices, or interacting with displays positioned at short viewing distances. Conventional corrective approaches include fixed-power reading glasses, bifocal or multifocal lenses, and progressive lenses. While such solutions provide optical correction, they require compromises between near and far vision, impose constraints on a head posture or a gaze direction, or lack adaptability to dynamically changing viewing distances.

More recently, adaptive eyewear systems have been proposed in which an optical power of a lens element can be varied in response to a detected viewing condition. However, many existing adaptive viewing solutions rely on explicit user input, manual mode switching, or intermittent tracking of viewing distance, which may lead to incorrect and/or delayed switching responses, unstable optical behaviour, or user discomfort. In particular, measurement noise, user movement, brief gaze changes, and inaccurate viewing distance estimates may result in oscillatory behaviour, transient blurring, or improper activation of vision correction. As an example, abrupt changes in the optical power may cause visual discomfort or transient artifacts, while overly slow transitions may cause perceptible latency and reduce usability. Existing adaptive viewing systems often exhibit limitations in controlling optical power transitions, which adversely affects a balance between responsiveness and stability.

Therefore, in light of the foregoing discussion, there exists a need to overcome the aforementioned drawbacks.

### SUMMARY

The present disclosure seeks to provide an adaptive viewing system and a method for adaptive viewing. The aim of the present disclosure is achieved by an adaptive viewing system and a method for adaptive viewing which facilitate an accurate and reliable way to control at least one adaptive optical element to produce optical powers, by way of detecting gaze depth transitions and adjusting a drive signal for the at least one adaptive optical element accordingly by applying drive signal transitions, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1A illustrates a schematic example implementation of an adaptive viewing system, while FIG. 1B illustrates an exemplary usage scenario of the adaptive viewing system, in accordance with an embodiment of the present disclosure;
FIG. 2 illustrates steps of a method for adaptive viewing, in accordance with an embodiment of the present disclosure; and
FIG. 3A illustrates an exemplary timing diagram representing a variation of a gaze depth of a user as a function of time, while FIG. 3B illustrates an exemplary timing diagram representing adjustment of a drive signal in response to the variation of the gaze depth shown in FIG. 3A, as a function of time, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides an adaptive viewing system comprising:
eyewear with at least one adaptive optical element;
a depth-sensing camera; and
at least one processor configured to:
   determine a gaze depth of a user wearing the eyewear, based on sensor data collected by the depth-sensing camera;
   detect a first gaze depth transition, wherein the first gaze depth transition is detected when the gaze depth changes from being equal to or greater than a predefined threshold to being less than the predefined threshold;
   adjust a drive signal for the at least one adaptive optical element by applying a first drive signal transition when the first gaze depth transition is detected, to produce at least one first optical power in the at least one adaptive optical element, wherein the at least one first optical power is determined based on the gaze depth that is less than the predefined threshold; and
   control the at least one adaptive optical element using its corresponding drive signal.

The present disclosure provides the aforementioned adaptive viewing system that offers several technical benefits over existing adaptive eyewear solutions. By determining the gaze depth of the user and detecting the first gaze depth transition relative to the predefined threshold, the adaptive viewing system enables a behaviour-driven and threshold-based identification of a change in the user's viewing condition, rather than reacting to instantaneous or noisy depth measurements. This gaze depth detection ensures that optical power adjustment is triggered only when a meaningful transition of the gaze depth from a far viewing condition to a near viewing condition is inferred from a user's actual viewing behaviour, thereby reducing false activations and unstable optical power adjustments. Furthermore, adjusting the drive signal for the at least one adaptive optical element only upon detection of the first gaze depth transition enables the at least one adaptive optical element to remain in a stable optical power state during sustained viewing conditions, thereby preventing unnecessary optical oscillations due to gaze jitter or micro-movements. This improves optical stability and visual comfort, particularly during prolonged far viewing or near viewing. Additionally, since the at least one first optical power is determined based on the gaze depth that is less than the predefined threshold, the at least one adaptive optical element can produce an optical power that corresponds to the user's actual near viewing distance, rather than applying a same fixed add power for every near viewing situation. This improves the user experience by minimizing transition delay and reducing unwanted visual disturbance during far-to-near gaze shifts, while providing highly reliable near viewing correction when the user's gaze truly changes to near viewing. Overall, a synergistic combination of gaze-depth-based and threshold-based transition detection and controlled drive signal adjustment enables the adaptive viewing system to facilitate real time or near-real time, stable, and behaviourally relevant optical power changes. This improves responsiveness during natural gaze shifts, reduces perceptible latency and visual artefacts, and enhances an overall visual comfort for the user, particularly in scenarios involving frequent transitions between near viewing and far viewing. By integrating a depth-sensing camera external to the eyewear, said system avoids need for in-eyewear depth sensing, thereby reducing eyewear weight, power consumption, and thermal impact. The use of a gaze transition-based optical power switching mechanism minimises wear of the at least one adaptive optical element over time. The adaptive viewing system is compact, low-latency, and energy-efficient, whilst still delivering highly response and behaviourally accurate optical power transitions.

Notably, the at least one processor controls an overall operation of the adaptive viewing system. For this purpose, the at least one processor is communicably coupled to the at least one adaptive optical element and the depth-sensing camera. It will be appreciated that the at least one processor could be implemented as any one of: a microprocessor, a microcontroller. As an example, the at least one processor could be implemented as an application-specific integrated circuit (AISC) chip or a reduced instruction set computer (RISC) chip.

Throughout the present disclosure, the term *"eyewear"* refers to an apparatus that is to be worn over user's eyes. Examples of such an eyewear include, but are not limited to, a pair of eyeglasses, a pair of sunglasses, a pair of smart glasses. Furthermore, the term *"adaptive optical element"* refers to an optical element whose optical power can be changed. In other words, an optical power of the at least one adaptive optical element is adjustable. Optionally, the at least one adaptive optical element is implemented as at least one lens.

Throughout the present disclosure, the term *"depth-sensing camera"* refers to a camera that, in operation, senses and captures at least depth information in an environment where the user is using the eyewear. It will be appreciated that when the adaptive viewing system is in use, the depth-sensing camera is arranged to face the user, in the environment where the user is using the eyewear. Examples of the depth-sensing camera include, but are not limited to, a Time-of-Flight (ToF) camera, a light detection and ranging (LiDAR) camera, a Red-Green-Blue-Depth (RGB-D) camera, a stereo camera, an infrared (IR) camera, a Sound Navigation and Ranging (SONAR) camera.

Notably, the gaze depth of the user wearing the eyewear is determined, based on the sensor data collected by the depth-sensing camera. The sensor data is collected continuously or at predefined intervals, while the adaptive viewing system is in use. The term *"gaze depth"* refers to a depth value indicative of a distance from the user's eye to a point or region in the environment at which the user's gaze is focused. The gaze depth may correspond to a near viewing distance, for example, such as when the user is reading or when the user is focussing on a nearby object (for example, such as a display device). Conversely, the gaze depth may correspond to a farther viewing distance, for example, such as when the user is viewing faraway (namely, distant) objects.

Optionally, the sensor data comprises at least one of: depth information, images of the user's face. The depth information may be in a form of a depth map, a two-dimensional (2D) or three-dimensional (3D) face mesh, a point cloud, a lookup table comprising per-pixel distance values, or similar.

In an embodiment, the sensor data comprises the depth information, wherein when determining the gaze depth, the at least one processor is configured to process the depth information to determine the gaze depth. This is possible because the depth information provides comprehensive information pertaining to where the user's face is located in a distance range measurable by the depth-sensing camera and thus a distance between the user's face and the depth-sensing camera is assumed to correspond to the gaze depth. The step of processing the depth information can be performed using any suitable well-known technique.

In another embodiment, the sensor data comprises the depth information and the images of the user's face, wherein when determining the gaze depth, the at least one processor is configured to:
detect a pose of pupils of the user's eyes, as represented in said images;
estimate a gaze vector of the user relative to the user's face, based on the detected pose; and
calculate the gaze depth, based on the gaze vector and the depth information.

For calculating the gaze depth, the at least one processor is configured to obtain a distance to a gaze point along the gaze vector, using the depth information. This gaze-vector-based determination of the gaze depth advantageously reduces false detections in scenarios where the user's face is within a distance range measurable by the depth-sensing camera, but the user is actually gazing at a distant object rather than a nearby object. For example, the depth-sensing camera may be utilised to accurately measure a distance between the user's face and the depth-sensing camera, while the user's gaze is directed past the depth-sensing camera towards the distant object. In such a case, determining the gaze depth based on the gaze vector and the depth information enables the adaptive viewing system to refrain from activating a near-viewing optical power when such activation would be inappropriate.

It will be appreciated that the gaze depth can be reliably and accurately determined by employing the depth-sensing camera, irrespective of whether or not the user's gaze is directed towards the depth-sensing camera. This enables the adaptive viewing system to correctly distinguish between situations in which the user is physically close to the depth-sensing camera but visually attending to a faraway object, and situations in which the user is actually viewing a nearby object. As a result, the determination of gaze depth remains robust and applicable across a wide range of viewing conditions, including near-viewing and far-viewing conditions, without requiring the user's gaze to be aligned with the depth-sensing camera.

It will also be appreciated that determining the gaze depth is important because it enables the adaptive viewing system to distinguish between a near viewing condition and a distance viewing condition, based on what the user is focussing/gazing at. Accordingly, by controlling the at least one adaptive optical element based on the gaze depth, and in particular, on gaze depth transitions, the adaptive viewing system achieves highly reliable and context-appropriate optical power adjustments, thereby improving visual comfort for the user and reducing undesired or premature changes in the optical power. Furthermore, by leveraging external gaze depth sensing, the adaptive viewing system ensures stable measurement that is resilient to noise and is not adversely impacted by user's minor head movements. This mitigates the risk of oscillatory behaviour and false positives (i.e., misinterpretation of brief gaze changes as intentional gaze depth transitions). Use of an externally-implemented depth-sensing camera eliminates extra weight, power consumption, cost, and calibration complexity typically associated with eyewear-integrated depth sensing solutions. It also enables adaptive viewing functionality to be deployed across multiple eyewear comprising adaptive optical elements, without requiring embedded depth sensors in each eyewear.

Notably, the first gaze depth transition is detected when the gaze depth changes from being equal to or greater than the predefined threshold to being less than the predefined threshold. The term *"gaze depth transition"* refers to a change in the gaze depth of the user relative to the predefined threshold that distinguishes between the near viewing condition and the distance viewing condition. It will be appreciated that the predefined threshold is a reference gaze depth for classifying the user's viewing condition. In particular, the predefined threshold can be understood to be a gaze depth such that all gaze depths that are equal to or greater than said gaze depth correspond to the distance viewing condition, and all gaze depths that are less than said gaze depth correspond to the near viewing condition.

The first gaze depth transition corresponds to a transition from the distance viewing condition to the near viewing condition. It is to be understood that the at least one processor may detect any gaze depth transition by repeatedly monitoring the gaze depth and evaluating whether or not said gaze depth has crossed the predefined threshold.

Optionally, the predefined threshold lies in a range of 0.5 metres to 1.5 metres. For example, the predefined threshold may from 0.5, 0.6, 0.7, 0.8, 0.9, 1.0, or 1.2 metres up to 0.75, 1.0, 1.1, 1.25, 1.3, 1.4, or 1.5 metres. When the gaze depth is detected to be less than a value within the aforesaid range, the at least one processor determines that the user is looking at a nearby object (such as a handheld electronic device, or a document, or similar), i.e., it is the near viewing condition. Conversely, when the gaze depth is equal to or greater than the predefined threshold, the at least one processor determines that the user is looking at a faraway object, i.e., it is the distance viewing condition. It will be appreciated that when detecting a given gaze depth transition, the at least one processor may be configured to apply a temporal filtering process. For example, the gaze depth may be required to remain below the predefined threshold for a predefined duration before the first gaze depth transition is confirmed. Such a temporal filtering reduces false detections caused by transient gaze movements, brief head motions, or momentary depth estimation noise. The term *"given gaze depth transition"* encompasses at least the first gaze depth transition, and optionally, a second gaze depth transition (described later).

It will be appreciated that detecting the first gaze depth transition is important because it serves as a trigger condition for adjusting the drive signal for the at least one adaptive optical element, to produce the at least one first optical power (that is suitable for the near viewing condition). By explicitly detecting this transition from the distance viewing condition to the near viewing condition, the adaptive viewing system ensures that the near-viewing optical power is activated only when the user's viewing behaviour indicates an actual intention to focus on a nearby object.

Notably, the drive signal for the at least one adaptive optical element is adjusted by applying the first drive signal transition when the first gaze depth transition is detected, to produce the at least one first optical power in the at least one adaptive optical element, wherein the at least one first optical power is determined based on the gaze depth that is less than the predefined threshold. The term *"drive signal transition"* refers to a change applied to the drive signal supplied to the at least one adaptive optical element, wherein said change causes the at least one adaptive optical element to transition from producing one optical power to producing another optical power. This means that a given drive signal transition defines how the drive signal changes over time when transitioning between different viewing conditions, and thereby governs a dynamic behaviour of the at least one adaptive optical element in producing different optical powers corresponding to the different viewing conditions. It will be appreciated that the given drive signal transition may comprise a change in a value of at least one electrical parameter for driving the at least one adaptive optical element, and is applied in response to a detected given gaze depth transition. The at least one electrical parameter could, for example, be a voltage level, a current level, a rate of change of the voltage level, a rate of change of the current level, or similar. The term *"given drive signal transition"* encompasses at least the first drive signal transition, and optionally, a second drive signal transition (described later).

When there is a transition from the distance viewing condition to the near viewing condition (namely, the first gaze depth transition), the first drive signal transition is applied to produce the at least one first optical power in the at least one adaptive optical element. The at least one first optical power is an optical power produced by the at least one adaptive optical element when the gaze depth is less than the predefined threshold (i.e., during the near viewing condition). Optionally, when determining the at least one first optical power based on the gaze depth, the at least one processor is configured to utilise a predefined lookup table comprising a plurality of first optical powers and a plurality of gaze depths corresponding to the plurality of first optical powers. It will be appreciated that the at least one the at least one first optical power is utilised for focussing at a corresponding viewing distance as indicated by the determined gaze depth.

Optionally, the at least one adaptive optical element comprises a plurality of adaptive optical elements such that different first optical powers are produced in different adaptive optical elements from the plurality of adaptive optical elements. In this regard, the at least one processor optionally obtains information indicative of eye-specific corrections for near-viewing, to determine the different first optical powers. In an example, the at least one adaptive optical element comprises a first adaptive optical element corresponding to a first eye of the user, and a second adaptive optical element corresponding to a second eye of the user. In such a case, the first adaptive optical element may produce a first optical power of +0.5 dioptres (D), while the second adaptive optical element may produce a first optical power of +0.75 D. Alternatively, optionally, the at least one adaptive optical element comprises a plurality of adaptive optical elements such that a same first optical power is produced in each of the plurality of adaptive optical elements.

Typically, a positive optical power is used for reading or focussing on nearby objects (in a case where the user has presbyopia), while a zero optical power or a negative optical power (depending on whether or not the user has myopia) is used for distance viewing, i.e., to see faraway objects. It will be appreciated that since there is a transition from the distance viewing condition to the near viewing condition, the at least one first optical power is the positive optical power.

By adjusting the drive signal only upon detection of the first gaze depth transition, the adaptive viewing system ensures that the adaptive optical element is activated in response to an actual change in a viewing behaviour of the user. This reduces unnecessary or unstable changes in the optical power of the at least one adaptive optical element, and thus improves a visual comfort of the user by providing near-viewing optical power only when the gaze depth becomes less than the predefined threshold, indicating the near viewing condition.

Notably, the at least one adaptive optical element is controlled using its corresponding drive signal. In this regard, the corresponding drive signal may, for example, trigger a change in a value of the at least one electrical parameter for controlling the at least one adaptive optical element to produce the at least one first optical power. In an example, the predefined threshold may be 1 metre, and the user may currently be gazing at a gaze depth of 1.5 metres. When the user shifts his/her gaze to a nearby object, the gaze depth may change from 1.5 metres to 0.7 metres. In such a case, the at least one adaptive optical element may be controlled to produce a first optical power of +1.42 D corresponding to the gaze depth of 0.7 metres.

Optionally, when adjusting the drive signal for the at least one adaptive element by applying the first drive signal transition, the at least one processor is configured to:
select a first voltage transition function to transit from at least one second optical power to the at least one first optical power within a first predefined time period, wherein the at least one second optical power is produced by the at least one adaptive optical element when the gaze depth is equal to or greater than the predefined threshold; and
modify the drive signal according to the first voltage transition function, to generate the first drive signal transition.

Herein, the term *"voltage transition function"* refers to a function that defines how one or more voltage parameters of the drive signal change as a function of time during the given gaze depth transition. The one or more voltage parameters include one or more of: the voltage level, a voltage gradient, a voltage overdrive, a voltage waveform profile, a voltage polarity.

A selection of the first voltage transition function determines how the drive signal is shaped over time to cause the at least one adaptive optical element to transition from a far-viewing optical power (i.e., the at least one second optical power) to a near-viewing optical power (i.e., the at least one first optical power) within the first predefined time period. This selection is important because a dynamic response of the at least one adaptive optical element is governed not only by a value of the at least one first optical power, but also by a manner in which the drive signal is changed to reach the at least one first optical power from the at least one second optical power. This dynamic response is critical for system stability and user comfort.

It will be appreciated that modifying the drive signal according to the first voltage transition function involves adjusting the one or more voltage parameters of the drive signal over time. The at least one processor may determine a sequence or a profile of such parameters that cause a transition from a voltage state associated with the at least one second optical power to a voltage state associated with the at least one first optical power, within the first predefined time period. By generating the first drive signal transition in accordance with the first voltage transition function, the adaptive viewing system achieves a controlled, time-bound transition of optical power in the at least one adaptive optical element. This allows to produce the at least one first optical power (namely, a near-viewing optical power) in the at least one adaptive optical element within the first predefined time period, thereby improving user comfort and reducing undesirable visual artifacts during a far-to-near gaze shift with minimal latency. A technical benefit of this approach is that it enables the at least one adaptive optical element to reach the at least one first optical power within the first predefined time period after the first gaze depth transition is detected, whilst reducing undesired transient behaviour (for example, such as abrupt jumps, transient blurring, oscillatory behaviour, or similar) during the transition from the at least one second optical power to the at least one first optical power. This improves responsiveness of the adaptive viewing system while maintaining stability of the at least one first optical power, and also improves eye comfort (i.e., no eye strain) when the gaze depth changes from being equal to or greater than the predefined threshold to being less than the predefined threshold.

Optionally, the at least one first optical power is greater than the at least one second optical power. However, absolute values and signs of the at least one first optical power and the at least one second optical power may vary depending on system configuration and optical design choices.

In some cases, the at least one adaptive optical element produces no optical power during the distance viewing condition, and produces an optical power only during the near viewing condition. In such cases, the at least one second optical power is zero or near-zero, and the first optical power is a positive optical power. Moreover, in these cases, at least one fixed-power optical element optionally provides distance vision correction, and the at least one adaptive optical element provides a positive boost only when the near viewing condition is detected. The at least one fixed-power optical element has been described later in detail. In an example, the at least one second optical power is 0 D, while the at least one first optical power is +1.5 D.

In other cases, an optical power produced by the at least one adaptive optical element during the near viewing condition is greater than an optical power produced by the at least one adaptive optical element during the distance viewing condition. In other words, the at least one adaptive optical element produces a small positive optical power during the distance viewing condition, and produces a relatively larger positive optical power during the near viewing condition. This provides an accommodative effect to the user's eyes during the near viewing condition. In an example, the at least one second optical power is +0.25 D, while the at least one first optical power is +1.75 D.

Optionally, the first voltage transition function is one of: a step function, an overdrive function, a ramp function. In this regard, each of these functions defines a different temporal form of the first drive signal transition. In a case where the first voltage transition function is the step function, the at least one processor can modify the drive signal such that a voltage supplied to the at least one adaptive optical element changes significantly and abruptly from a first value of the voltage to a second value of the voltage, wherein the first value produces the at least one second optical power, and the second value produces the at least one first optical power. Employing the step function facilitates in rapidly attaining the at least one first optical power from the at least one second optical power with minimal latency.

In a case where the first voltage transition function is the overdrive function, the at least one processor can modify the drive signal such that a voltage supplied to the at least one adaptive optical element transitions from the first value of the voltage towards the second value of the voltage by initially transitioning from the first value to an overdrive voltage value that is greater than the second value for an overdrive duration, and then settling from the overdrive voltage value to the second value. Unlike the step function which applies the second value immediately, the overdrive function temporarily exceeds the second value to shorten transition time before settling. Employing the overdrive function facilitates in accelerating lens response time for attainment of the at least one first optical power from the at least one second optical power.

In a case where the first voltage transition function is the ramp function, the at least one processor can modify the drive signal such that a voltage supplied to the at least one adaptive optical element changes from the first value to the second value gradually over time according to a ramp profile. The ramp profile may be linear or non-linear, and can be tailored to suit specific lens response curves. It will be appreciated that employing the ramp function enables a controlled and smooth progressive transition from the at least one second optical power to the at least one first optical power, thereby reducing transient artefacts.

Optionally, when the first voltage transition function is the overdrive function, an overdrive strength with respect to a target voltage, and a duration of applying the overdrive strength, are determined based on the first predefined time period. In this regard, the term *"target voltage"* refers to a voltage which, when applied to the at least one adaptive optical element, produces the at least one first optical power. Moreover, the term *"overdrive strength"* refers to an extent to which a voltage applied to the at least one adaptive optical element is temporarily increased with respect to the target voltage, during the first drive signal transition. In some cases, the overdrive strength can be understood to be a multiplication factor employed for overdrive. For example, when the target voltage is 3 volts (V) and the overdrive strength is 1.5, the at least one processor may apply an overdrive voltage of 4.5 V for a certain duration, and thereafter reduce the overdrive voltage to the target voltage of 3 V. The duration of applying the overdrive strength (i.e., the overdrive duration) defines how long the overdrive voltage is maintained, before being reduced to the target voltage.

It will be appreciated that values of the overdrive strength and the duration of applying the overdrive strength are dynamically determined such that the at least one first optical power is reliably achieved within the first predefined time period. Beneficially, the at least one processor determines the overdrive strength and the duration of applying the overdrive strength such that they are sufficient to accelerate the transition towards the at least one first optical power, whilst still allowing the overdrive voltage to reduce to the target voltage within the first predefined time period. This enables time-bounded, repeatable generation of the first drive signal transition within the first predefined time period, rather than applying a fixed overdrive setting that may be too slow in some conditions or unnecessarily aggressive in other conditions. This approach also improves power efficiency and prevents excessive voltage stress on the at least one adaptive optical element. Furthermore, this approach also enables compatibility across different types of adaptive optical elements, by tailoring overdrive behaviour to their respective response characteristics.

Optionally, the first predefined time period lies in a range of 100 milliseconds to 1 second. A technical benefit of having the first predefined time period within the aforesaid range is that the aforesaid range constrains the first drive signal transition to occur within a time window that is short enough to be imperceptible to the user, yet being long enough for the at least one adaptive optical element to transition from the at least one second optical power to the at least one first optical power in a controlled and stable manner. As an example, if the first predefined time period is less than 100 milliseconds, it may result in excessively abrupt drive signal transitions that reduce stability of the at least one first optical power. As another example, if the first predefined time period is greater than 1 second, it may cause a significant latency during a change in the optical power with respect to a change in the gaze depth, thereby reducing an effectiveness of the adaptive viewing system. Accordingly, the aforesaid range of 100ms-1s balances responsiveness and stability of the adaptive viewing system, enabling the first drive signal transition to reliably produce the at least one first optical power within a time window that aligns with natural gaze shifts and near-viewing behaviour of the user. In an example, the first predefined time period may be from 100, 200, 300, 400, 500, 600, or 750 milliseconds up to 250, 350, 550, 700, 850, 900, or 1000 milliseconds.

It will be appreciated that the adaptive viewing system is designed to support varying viewing conditions of the user over time. In particular, after the at least one adaptive optical element is driven to provide an optical power suitable for the near viewing condition, the user may subsequently change his/her viewing behaviour such that the gaze depth corresponds to the distance viewing condition. In such situations, it is important for the adaptive viewing system to detect this change and update the drive signal accordingly, so that the optical power produced by the at least one adaptive optical element remains aligned with a current viewing condition of the user, thereby avoiding persistence of a near-viewing optical power when the user is no longer focussing on a nearby object.

Optionally, in this regard, the at least one processor is further configured to:
detect a second gaze depth transition, wherein the second gaze depth transition is detected when the gaze depth changes from being less than the predefined threshold to being equal to or greater than the predefined threshold; and
adjust the drive signal for the at least one adaptive optical element by applying a second drive signal transition when the second gaze depth transition is detected, to produce at least one second optical power in the at least one adaptive optical element, wherein the at least one second optical power is determined based on the gaze depth that is equal to or greater than the predefined threshold.

In this regard, the second gaze depth transition corresponds to a transition from the near viewing condition to the distance viewing condition. It will be appreciated that the at least one processor may detect the second gaze depth transition by repeatedly monitoring the gaze depth and evaluating whether or not the gaze depth has crossed the predefined threshold. In particular, when the gaze depth increases from a value that is less than the predefined threshold to a value that is equal to or greater than the predefined threshold, the at least one processor determines that the second gaze depth transition has occurred. Optionally, when detecting the second gaze depth transition, the at least one processor may be configured to apply a temporal filtering process. For example, the gaze depth may be required to remain equal to or greater than the predefined threshold for a predefined duration before the second gaze depth transition is confirmed. Such a temporal filtering reduces false detections caused by transient gaze movements, brief head motions, or momentary depth estimation noise when the user is shifting gaze away from a nearby object.

It will be appreciated that detecting the second gaze depth transition is important because it serves as a trigger condition for adjusting the drive signal for the at least one adaptive optical element to shift from the near-viewing optical power to an optical power suitable for distance viewing (namely, the at least one second optical power). By explicitly detecting this transition from the near viewing condition to the distance viewing condition, the adaptive viewing system ensures that the near-viewing optical power is deactivated only when the user's viewing behaviour indicates an actual intention to focus on a faraway object.

By adjusting the drive signal only upon detection of the second gaze depth transition, the adaptive viewing system ensures that the at least one adaptive optical element transitions away from the near-viewing optical power only in response to an actual change in the viewing behavior of the user. This prevents premature loss of near-viewing optical power during brief gaze excursions and improves overall visual comfort and stability during transitions between near viewing and distance viewing. Optionally, upon adjusting the drive signal, the at least one processor is configured to control the at least one adaptive optical element using the adjusted drive signal. In this regard, the updated drive signal may, for example, trigger a change in a value of the one or more voltage parameters for controlling the at least one adaptive optical element to produce the at least one second optical power. Optionally, when determining the at least one second optical power based on the gaze depth, the at least one processor is configured to utilise a predefined lookup table comprising a plurality of second optical powers and a plurality of gaze depths corresponding to the plurality of second optical powers. It will be appreciated that the at least one second optical power is utilised for focussing at a corresponding viewing distance as indicated by the determined gaze depth.

In an example, the predefined threshold may be 1 metre, and the user may currently be gazing at a gaze depth of 0.5 metres. When the user shifts his/her gaze to a faraway object, the gaze depth may change from 0.5 metres to 1.2 metres. In such a case, the at least one adaptive optical element is controlled to produce a second optical power of +0.83 D corresponding to the gaze depth of 1.2 metres.

Optionally, when adjusting the drive signal for the at least one adaptive element by applying the second drive signal transition, the at least one processor is configured to:
select a second voltage transition function to transit from the at least one first optical power to the at least one second optical power within a second predefined time period; and
modify the drive signal according to the second voltage transition function, to generate the second drive signal transition.

In this regard, a selection of the second voltage transition function determines how the drive signal is shaped over time to cause the at least one adaptive optical element to transition from the near-viewing optical power to the far-viewing optical power. It will be appreciated that a dynamic response of the at least one adaptive optical element during a near-to-far gaze shift is governed not only by a value of the at least one second optical power, but also by a manner in which the drive signal is changed to reach the at least one second optical power from the at least one first optical power.

By selecting the second voltage transition function and modifying the drive signal according to the selected second voltage transition function, the adaptive viewing system achieves a controlled, time-bound optical power transition during the near-to-far gaze shift. This allows the at least one adaptive optical element to produce the at least one second optical power within the second predefined time period, thereby reducing abrupt changes in optical power and improving visual comfort when the user shifts gaze from near viewing to distance viewing. A technical benefit of this approach is that it enables the at least one adaptive optical element to reach the at least one second optical power within the second predefined time period after the second gaze depth transition is detected, whilst reducing undesired transient behaviour during the transition from the at least one first optical power to the at least one second optical power. This improves responsiveness of the adaptive viewing system whilst maintaining stability of the at least one second optical power, and also improves eye comfort when the gaze depth changes from being less than the predefined threshold to being equal to or greater than the predefined threshold.

Optionally, the second voltage transition function is one of: a step function, an overdrive function, a ramp function. Optionally, when the second voltage transition function is the overdrive function, an overdrive strength with respect to a target voltage, and a duration of applying the overdrive strength, are determined based on the second predefined time period.

Optionally, the second predefined time period lies in a range of 100 milliseconds to 1 second. A technical benefit of having the second predefined time period within the aforesaid range is that it constrains the second drive signal transition to occur within a time window that is short enough to ensure quick deactivation of the near-viewing optical power after the second gaze depth transition is detected, yet long enough for the at least one adaptive optical element to transition from producing the at least one first optical power to producing the at least one second optical power in a controlled and stable manner. If the second predefined time period were shorter than the aforesaid range, the second drive signal transition could result in excessively abrupt changes in optical power, potentially causing discomfort or transient visual artifacts. Conversely, if the second predefined time period were longer than the aforesaid range, the near-viewing optical power could persist unnecessarily even after the user has shifted his/her gaze to distance viewing, thereby degrading distance vision. Thus, the aforesaid range facilitates improvement in responsiveness and stability of the adaptive eyewear system during near-to-far gaze shifts, and also ensures that the adaptive viewing system reliably produces the at least one second optical power in alignment with the user's far-viewing behaviour. In an example, the second predefined time period may be from 100, 200, 300, 400, 500, 600, or 750 milliseconds up to 250, 350, 550, 700, 850, 900, or 1000 milliseconds.

Optionally, the depth-sensing camera is implemented as a front camera of an electronic device. Examples of the electronic device include, but are not limited to, a smartphone, a tablet, a laptop, and a computer. Implementing the depth-sensing camera as the front camera of the electronic device provides several technical benefits. First, it enables determining the gaze depth without requiring a dedicated depth camera. This reduces hardware complexity and overall cost of implementing the adaptive viewing system, while still enabling reliable gaze-depth-based control of the at least one adaptive optical element. Second, front-facing cameras of electronic devices are typically positioned within a user's natural field of interaction during near-viewing activities, for example, such as reading text on a screen or interacting with user interfaces. As a result, sensor data (such as depth information) collected by such front-facing cameras is well suited for detecting gaze depth transitions (namely, transitions between a distant-viewing activity and a near-viewing activity), which are primary trigger conditions for controlling the at least one adaptive optical element. Third, using the front camera of the electronic device allows the adaptive viewing system to leverage existing, well-calibrated depth-sensing hardware and processing pipelines already available in consumer devices. This improves robustness and accuracy of gaze depth determination without imposing additional camera calibration burdens. Fourth, this implementation of the depth-sensing camera allows the adaptive viewing system to be configured to work with multiple eyewear incorporating adaptive optical elements, without requiring embedded depth sensors in each eyewear.

Optionally, the depth-sensing camera is arranged at a predefined distance from the user, the predefined distance being between 0.5 metres to 1.5 metres. For example, the predefined distance may be from 0.5, 0.6, 0.7, 0.8, 0.9, 1.0, or 1.2 metres up to 0.75, 1.0, 1.25, 1.4, or 1.5 metres. In this regard, when the adaptive viewing system is in use, the depth-sensing camera is positioned in the environment such that the user's face lies within the predefined distance from the depth-sensing camera. In an example, the depth-sensing camera may be integrated with the electronic device, or be arranged at a workstation fixture, a vehicle dashboard, a kiosk, or similar. Arranging the depth-sensing camera within the predefined range is beneficial because it enables reliable collection of the sensor data for determining the gaze depth and detecting gaze depth transitions. This is possible because the predefined distance corresponds to a typical user-to-device distance during interaction of the user with the electronic device, and during common near-to-far gaze shifts. Moreover, arranging the depth-sensing camera within the predefined range improves robustness of the sensor data collected by the depth-sensing camera. In particular, it reduces a likelihood of degraded gaze depth measurements that may occur when the user is considerably close to the depth-sensing camera or considerably far from the depth-sensing camera. Thus, arranging the depth-sensing camera at the predefined distance supports accurate determination of the gaze depth and stable operation of the adaptive viewing system across near viewing and distance viewing conditions.

Optionally, the eyewear further comprises at least one fixed-power optical element providing a baseline optical power. In this regard, the eyewear has the at least one fixed-power optical element in addition to the at least one adaptive optical element. The baseline optical power is a fixed optical power which is utilised to correct distance vision and any refractive errors, whereas an adaptive optical power (namely, any one of: the at least one first optical power, the at least one second optical power) produced by the at least one adaptive optical element is variable in response to detected gaze depth transitions. It will be appreciated that a total optical power perceived by the user is a combination of the baseline optical power and the adaptive optical power. The total optical power can be mathematically expressed as:$total optical power = baseline optical power + adaptive optical power$

It will be appreciated that the baseline optical power may be a positive optical power or a negative optical power, depending on refractive correction required for the distance vision, while the adaptive optical power provides a zero optical power or a positive optical power depending on the distance viewing condition or the near viewing condition. During the distance viewing condition, the at least one adaptive optical element need not provide any substantial additional optical power, and thus the at least one second optical power may be zero or near-zero. However, the at least one second optical power may be a small positive optical power, for example, to provide a baseline accommodative bias or to support intermediate gaze depths while remaining suitable for the far viewing condition. When the gaze depth is less than the predefined threshold, the optical power to be produced by the at least one adaptive optical element increases to the at least one first optical power, such that the at least one first optical power is greater than the at least one second optical power and provides a positive optical power suitable for the near viewing condition. In simple terms, the adaptive optical power can be a small positive optical power for the distance viewing condition and can increase to a large positive optical power during the near viewing condition.

In an example, the baseline optical power may be -1.5 D. During the distance viewing condition, the at least one adaptive optical element produces the at least one second optical power of 0 D. In such a case, the total optical power perceived by the user is -1.50 D (i.e., -1.5 D + 0 D). When the first gaze depth transition is detected (i.e., when the gaze depth transitions from far to near), the at least one adaptive optical element produces the at least one first optical power of +2 D (corresponding to gaze depth of 50 cm) for providing near-vision correction. In such a case, the total optical power perceived by the user is +0.5 D (i.e., -1.5 D + 2 D).

Optionally, the adaptive viewing system further comprises an eye tracker arranged in the eyewear, wherein the at least one processor is further configured to:
determine gaze directions of eyes of the user, based on eye tracking data collected by the eye tracker;
determine an optical depth at which the user is gazing, based on the gaze directions of the eyes of the user; and
selectively adjust the gaze depth, based on the determined optical depth.

The term *"eye tracker"* refers to specialised equipment that is employed to detect and/or follow a direction of gaze an eye of the user. Such eye tracking is performed when the eyewear, in operation, is worn by the user over his/her eyes. Optionally, the eye tracker is implemented by way of cameras monitoring features of the user's eyes, a set of light emitting diodes (LED, in particular infra-red LED (IR-LED) and respective photo detectors, contact lenses having sensors, and the like. Such features may comprise at least one of: a shape of a pupil of the user's eye, a size of the pupil, corneal reflections of at least one light source from a surface of the user's eye, a relative position of the pupil with respect to the corneal reflections, a relative position of the pupil with respect to corners of the user's eye. An exemplary way to implement eye tracking, using IR-LEDs and photo detectors, is to send a pulse of light from an IR-LED and monitor amount of light reflected from the surface of the eye. The reflected light amount correlates with gaze direction. Such eye trackers are well-known in the art. The term *"gaze direction"* refers to a direction in which the eye of the user is gazing.

It is to be understood that when user's gaze is directed (namely, focussed) towards a region within the environment, a gaze direction of a first eye of the user and a gaze direction of a second eye of the user are different from each other. Optionally, the optical depth at which the user is gazing is determined based on a convergence of the gaze directions of the eyes of the user. In this regard, the optical depth can be determined, based on an inter-pupillary distance of the user, by using a triangulation technique. The optical depth represents a depth estimate derived from the gaze directions of the eyes of the user and provides an additional depth-related measure indicative of where the user is focussing.

It will be appreciated that the gaze depth (determined based on the sensor data) can be selectively refined (namely, fine-tuned) using the determined optical depth as an additional input data point. For example, the at least one processor may selectively adjust the gaze depth by applying a correction that uses the optical depth to refine the gaze depth, thereby producing the adjusted gaze depth that accurately corresponds to a depth at which the user is actually gazing. Such selective adjustment is beneficial in improving accuracy and robustness for detecting the first gaze depth transition and optionally the second gaze depth transition, particularly in scenarios where the depth information from the depth-sensing camera alone may be ambiguous or may represent a distance to the user's face rather than a depth of a gaze point. As another example, even when the optical depth is available, the gaze depth determined based on the sensor data may remain unadjusted. This beneficially improves context-appropriate control of the at least one adaptive optical element by ensuring that optical power adjustments are based on the gaze depth at which the user is actually gazing, rather than solely on a distance between the user and the depth-sensing camera.

Optionally, when selectively adjusting the gaze depth, the at least one processor is configured to prioritise the gaze depth determined based on the sensor data collected by the depth-sensing camera over the optical depth determined using the eye tracking data. In an embodiment where the adaptive viewing system also comprises the eye tracker arranged in the eyewear, the adaptive viewing system may be configured such that control of the at least one adaptive optical element based on the optical depth (determined using the eye tracking data collected by the eye tracker) is selectively overridden or supplemented using the gaze depth (determined based on the sensor data collected by the depth-sensing camera). For example, when the at least one processor determines that the eye tracking data is unavailable, insufficiently calibrated, noisy (i.e., unreliable), or inconsistent with the sensor data from the depth-sensing camera, the at least one processor may control the at least one adaptive optical element at least based on the gaze depth determined from the depth-sensing camera, or may combine both measurements using a weighting or correction to obtain adjusted gaze depth. This means that the gaze depth is selectively adjustable such that it (i) fully overrides the optical depth (i.e., the gaze depth is unchanged and the optical depth is ignored), (ii) is partially modified by the optical depth, or (iii) is supplemented by the optical depth. A nature and magnitude of such selective adjustment of the gaze depth may be based on at least one of: confidence levels associated with the sensor data and the eye tracking data, a degree of consistency between the gaze depth and the optical depth, a predefined weighting or prioritization scheme, an operating mode of the adaptive viewing system. Prioritising the gaze depth determined from the depth-sensing camera when selectively adjusting the gaze depth is beneficial for improving robustness and reliability of gaze depth transition detection and corresponding optical power control in challenging operating conditions.

In some embodiments, the adaptive viewing system is configured to operate such that the optical power of the at least one adaptive optical element is controlled without requiring a user-specific eye-tracking calibration procedure. In such embodiments, gaze-depth-based control is performed primarily using the sensor data collected by the depth-sensing camera (implemented, for example, as the front camera of the electronic device. When the electronic device is used at the near viewing distance (for example, when the user is looking at a display screen of the electronic device), the adaptive viewing system automatically causes the at least one adaptive optical element to provide near-viewing optical power, and when the user shifts gaze away from the electronic device towards the farther viewing distance, the adaptive viewing system correspondingly reduces said near-viewing optical power. Such an operational mode is beneficial when the environment of using the eyewear may be a temporary usage environment (for example, such as a retail environment like an optician shop) where the user wishes to experience automatic changes in optical power without performing a time-consuming calibration procedure.

In a second aspect, an embodiment of the present disclosure provides a method for adaptive viewing, the method comprising:
determining a gaze depth of a user wearing an eyewear, based on sensor data collected by a depth-sensing camera, the eyewear having at least one adaptive optical element;
detecting a first gaze depth transition, wherein the first gaze depth transition is detected when the gaze depth changes from being equal to or greater than a predefined threshold to being less than the predefined threshold;
adjusting a drive signal for the at least one adaptive optical element by applying a first drive signal transition when the first gaze depth transition is detected, for producing at least one first optical power in the at least one adaptive optical element, wherein the at least one first optical power is determined based on the gaze depth that is less than the predefined threshold; and
controlling the at least one adaptive optical element using its corresponding drive signal.

The present disclosure provides the aforementioned method that offers several technical benefits over existing approaches. The method enables a change in the user's viewing condition to be identified in a discrete and behaviour-driven manner, rather than reacting to instantaneous or noisy depth measurements. By leveraging threshold-based gaze depth transitions, optical power adjustment is performed only when a meaningful transition of the gaze depth is inferred from the user's actual viewing behaviour, thereby reducing false activations and unstable optical power adjustments. Furthermore, the method enables the at least one adaptive optical element to remain in a stable optical power state during sustained viewing conditions, thereby avoiding unwanted variations due to transient gaze noise. This improves optical stability and visual comfort, particularly during prolonged far viewing or near viewing. In addition to this, the method causes the at least one adaptive optical element to produce an optical power that corresponds to the user's actual near viewing distance, rather than applying a same fixed add power for every near viewing situation. This improves user experience by reducing delay and unwanted visual disturbance during far-to-near gaze shifts, while providing highly reliable near viewing correction when the user's gaze truly changes to near viewing. Overall, a synergistic combination of gaze-depth-based and threshold-based transition detection and time-relevant drive signal adjustment enables the method to facilitate real time or near-real time, and behaviourally relevant optical power changes. This improves responsiveness during natural gaze shifts, reduces perceptible latency and visual artefacts, and enhances overall visual comfort for the user, particularly in scenarios involving frequent transitions between near viewing and far viewing. The method is simple, robust, and computationally efficient, supporting easy implementation for real time adaptive viewing.

The present disclosure also relates to the method as described above. Various embodiments and variants disclosed above, with respect to the aforementioned first aspect, apply *mutatis mutandis* to the method.

Optionally, in the method, the step of adjusting the drive signal for the at least one adaptive element by applying the first drive signal transition comprises:
selecting a first voltage transition function to transit from at least one second optical power to the at least one first optical power within a first predefined time period, wherein the at least one second optical power is produced by the at least one adaptive optical element when the gaze depth is equal to or greater than the predefined threshold; and
modifying the drive signal according to the first voltage transition function, for generating the first drive signal transition.

Optionally, in the method, the first voltage transition function is one of: a step function, an overdrive function, a ramp function.

Optionally, in the method, when the first voltage transition function is the overdrive function, an overdrive strength with respect to a target voltage, and a duration of applying the overdrive strength, are determined based on the first predefined time period.

Optionally, in the method, the first predefined time period lies in a range of 100 milliseconds to 1 second.

Optionally, the method further comprises:
detecting a second gaze depth transition, wherein the second gaze depth transition is detected when the gaze depth changes from being less than the predefined threshold to being equal to or greater than the predefined threshold; and
adjusting the drive signal for the at least one adaptive optical element by applying a second drive signal transition when the second gaze depth transition is detected, for producing at least one second optical power in the at least one adaptive optical element, wherein the at least one second optical power is determined based on the gaze depth that is equal to or greater than the predefined threshold.

Optionally, in the method, the step of adjusting the drive signal for the at least one adaptive element by applying the second drive signal transition comprises:
selecting a second voltage transition function to transit from the at least one first optical power to the at least one second optical power within a second predefined time period; and
modifying the drive signal according to the second voltage transition function, to generate the second drive signal transition.

Optionally, in the method, the second predefined time period lies in a range of 100 milliseconds to 1 second.

Optionally, in the method, the depth-sensing camera is implemented as a front camera of an electronic device.

Optionally, in the method, the depth-sensing camera is arranged at a predefined distance from the user, the predefined distance being between 0.5 metres to 1.5 metres.

Optionally, in the method, the eyewear further comprises at least one fixed-power optical element providing a baseline optical power.

Optionally, the method further comprises:
determining gaze directions of eyes of the user, based on eye tracking data collected by an eye tracker that is arranged in the eyewear;
determining an optical depth at which the user is gazing, based on the gaze directions of the eyes of the user; and
selectively adjusting the gaze depth, based on the determined optical depth.

Optionally, in the method, when performing the step of selectively adjusting the gaze depth, the gaze depth determined based on the sensor data collected by the depth-sensing camera is prioritised over the optical depth determined using the eye tracking data.

### DETAILED DESCRIPTION OF THE DRAWINGS

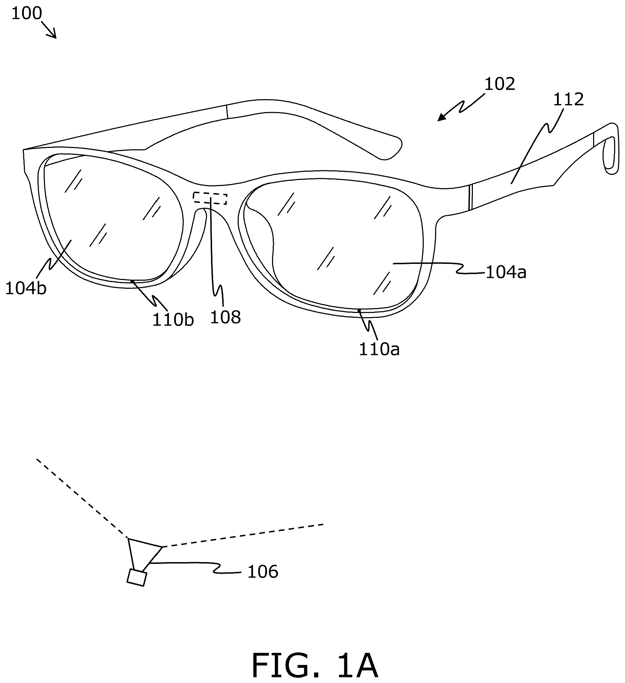

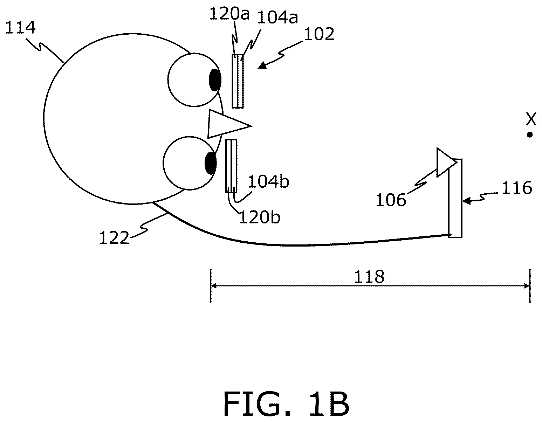

Referring to FIGs. 1A and 1B, FIG. 1A illustrates a schematic example implementation of an adaptive viewing system **100,** while FIG. 1B illustrates an exemplary usage scenario of the adaptive viewing system **100,** in accordance with an embodiment of the present disclosure. In FIG. 1A, the adaptive viewing system **100** comprises an eyewear **102** with at least one adaptive optical element (for example, depicted as an adaptive optical element **104a** corresponding to a first eye, and an adaptive optical element **104b** corresponding to a second eye), a depth-sensing camera **106,** and at least one processor (for example, depicted as a processor **108).** The eyewear **102** is shown to be implemented as a pair of eyeglasses. Optionally, the adaptive viewing system **100** further comprises an eye tracker (for example, depicted as an eye tracker **110a** corresponding to the first eye, and an eye tracker **110b** corresponding to the second eye) arranged in the eyewear **102.** The processor **108** is communicably coupled to the depth-sensing camera **106,** the adaptive optical elements **104a** and **104b,** and optionally, to the eye trackers **110a** and **110b.** The processor **108** is configured to perform various operations, as described earlier with respect to the aforementioned first aspect. Optionally, the eyewear **102** comprises a frame **112** for holding the adaptive optical elements **104a** and **104b.**

In FIG. 1B, a user **114** is shown wearing the eyewear **102** and holding an electronic device **116** in the user's hand **122,** wherein the depth-sensing camera **106** is implemented as a front camera of the electronic device **116.** The user **114** is facing the depth-sensing camera **110** but is, for example, gazing towards a point **X** in a direction of the depth-sensing camera **110.** The depth-sensing camera **110** captures one or more images representing at least one of: a pose of the user's head, a pose of pupils of the user's eyes, in relation to the depth-sensing camera **106.** In this regard, the processor **108** can process the one or more images to determine a gaze depth **118** of the user **114** wearing the eyewear **102.** For example, the depth-sensing camera **106** may be arranged at a predefined distance of 0.5 metres from the user **114.** Optionally, the eyewear **102** further comprises at least one fixed-power optical element (for example, depicted as a fixed-power optical element **120a** corresponding to the first eye, and a fixed-power optical element **120b** corresponding to the second eye) providing a baseline optical power.

FIGs. 1A and 1B are merely examples, which should not unduly limit the scope of the claims herein. A person skilled in the art will recognize many variations, alternatives, and modifications of embodiments of the present disclosure.

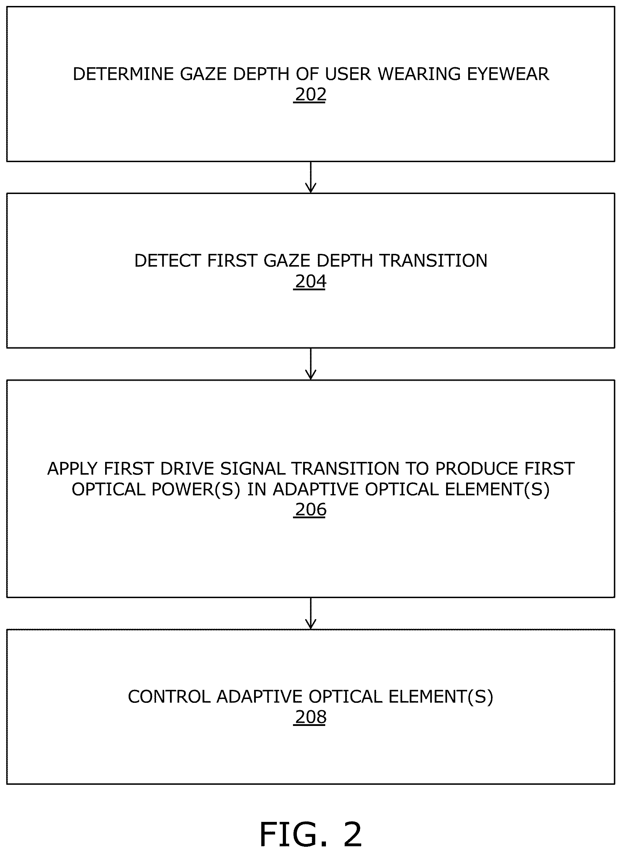

Referring to FIG. 2, illustrated are steps of a method for adaptive viewing, in accordance with an embodiment of the present disclosure. At step **202,** a gaze depth of a user wearing an eyewear, is determined, based on sensor data collected by a depth-sensing camera, the eyewear having at least one adaptive optical element. At step **204,** a first gaze depth transition is detected, wherein the first gaze depth transition is detected when the gaze depth changes from being equal to or greater than a predefined threshold to being less than the predefined threshold. At step **206,** a drive signal for the at least one adaptive optical element is adjusted by applying a first drive signal transition when the first gaze depth transition is detected, to produce at least one first optical power in the at least one adaptive optical element, wherein the at least one first optical power is determined based on the gaze depth that is less than the predefined threshold. At step **208,** the at least one adaptive optical element is controlled using its corresponding drive signal.

The aforementioned steps are only illustrative and other alternatives can also be provided where one or more steps are added, one or more steps are removed, or one or more steps are provided in a different sequence without departing from the scope of the claims herein.

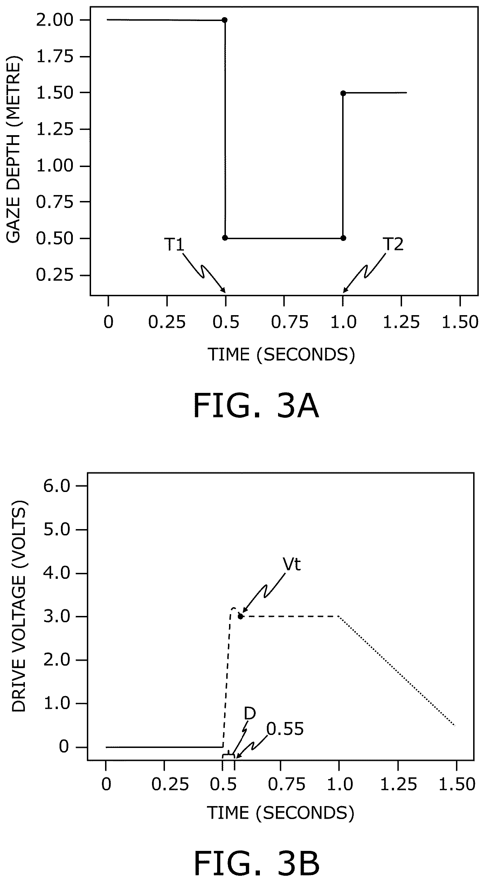

Referring to FIGs. 3A and 3B, FIG. 3A illustrates an exemplary timing diagram representing a variation of a gaze depth of a user as a function of time, while FIG. 3B illustrates an exemplary timing diagram representing adjustment of a drive signal in response to the variation of the gaze depth shown in FIG. 3A, as a function of time, in accordance with an embodiment of the present disclosure.

When the gaze depth changes from being equal to or greater than the predefined threshold to being less than a predefined threshold, a first gaze depth transition is detected (i.e., indicating a transition from a distance viewing condition to a near viewing condition). Conversely, when the gaze depth changes from being less than the predefined threshold to being equal to or greater than the predefined threshold, a second gaze depth transition is detected (i.e., indicating a transition from the near viewing condition to the distance viewing condition). The predefined threshold may, for example, be 1 metre, for detecting gaze depth transitions.

In FIG. 3A, as shown, the first gaze depth transition is detected at a first time instant **T1** = 0.5 second, when the gaze depth changes from 2 metres to 0.5 metre. Later, the second gaze depth transition is detected at a second time instant **T2** = 1 second, when the gaze depth changes from 0.5 metre to 1.6 metres.

In FIG. 3B, it is shown that upon detection of the first gaze depth transition, the drive signal is adjusted by applying a first drive signal transition. For applying the first drive signal transition, the drive signal is modified according to a first voltage transition function **F1** (depicted using a dashed curve). The first voltage transition function **F1** is selected to transit from at least one second optical power to at least one first optical power within a first predefined time period of, for example, 100 milliseconds, wherein the at least one second optical power is produced by the at least one adaptive optical element when the gaze depth is 2 metres, and wherein the at least one first optical power is produced by the at least one adaptive optical element when the gaze depth is 0.5 metre. As shown for example, the first voltage transition function **F1** is an overdrive function, wherein a drive voltage of 0 volts (V) that corresponded to the gaze depth of 2 metres, is temporarily increased to be above a target voltage **Vt** = 3 V, for a duration **D** of, for example, 50 milliseconds, and is thereafter reduced to the target voltage **Vt** that produces the at least one first optical power.

Next, upon detection of the second gaze depth transition, the drive signal is adjusted by applying a second drive signal transition. For applying the second drive signal transition, the drive signal is modified according to a second voltage transition function **F2** (depicted using a dotted curve). The second voltage transition function **F2** is selected to transit from the at least one first optical power to at least one second optical power within a second predefined time period of, for example, 500 milliseconds, wherein the at least one first optical power is produced by the at least one adaptive optical element when the gaze depth is 0.5 metre, and wherein the at least one second optical power is produced by the at least one adaptive optical element when the gaze depth is 1.5 metre. As shown for example, the second voltage transition function **F2** is a ramp function, wherein the drive signal voltage is gradually changed from the target voltage **Vt** of 3 V associated with the at least one first optical power to a voltage value of 0.5 V that produces the at least one second optical power corresponding to the gaze depth of 1.5 metres, within 500 milliseconds.

FIGs. 3A and 3B are merely examples, which should not unduly limit the scope of the claims herein. A person skilled in the art will recognize many variations, alternatives, and modifications of embodiments of the present disclosure.

## Claims

1. An adaptive viewing system (100) comprising:
an eyewear (102) with at least one adaptive optical element (104a-b);
a depth-sensing camera (106); and
at least one processor (108) configured to:
determine a gaze depth (118) of a user (114) wearing the eyewear, based on sensor data collected by the depth-sensing camera;
detect a first gaze depth transition, wherein the first gaze depth transition is detected when the gaze depth changes from being equal to or greater than a predefined threshold to being less than the predefined threshold;
adjust a drive signal for the at least one adaptive optical element by applying a first drive signal transition when the first gaze depth transition is detected, to produce at least one first optical power in the at least one adaptive optical element, wherein the at least one first optical power is determined based on the gaze depth that is less than the predefined threshold; and
control the at least one adaptive optical element using its corresponding drive signal.

2. An adaptive viewing system (100) according to claim 1, wherein when adjusting the drive signal for the at least one adaptive element by applying the first drive signal transition, the at least one processor (108) is configured to:
select a first voltage transition function (F1) to transit from at least one second optical power to the at least one first optical power within a first predefined time period, wherein the at least one second optical power is produced by the at least one adaptive optical element (104a-b) when the gaze depth (118) is equal to or greater than the predefined threshold; and
modify the drive signal according to the first voltage transition function, to generate the first drive signal transition.

3. An adaptive viewing system (100) according to claim 2, wherein the first voltage transition function (F1) is one of: a step function, an overdrive function, a ramp function.

4. An adaptive viewing system (100) according to claim 3, wherein when the first voltage transition function (F1) is the overdrive function, an overdrive strength with respect to a target voltage (Vt), and a duration (D) of applying the overdrive strength, are determined based on the first predefined time period.

5. An adaptive viewing system (100) according to any of claims 2-4, wherein the first predefined time period lies in a range of 100 milliseconds to 1 second.

6. An adaptive viewing system (100) according to any of the preceding claims, wherein the at least one processor (108) is further configured to:
detect a second gaze depth transition, wherein the second gaze depth transition is detected when the gaze depth (118) changes from being less than the predefined threshold to being equal to or greater than the predefined threshold; and
adjust the drive signal for the at least one adaptive optical element (104a-b) by applying a second drive signal transition when the second gaze depth transition is detected, to produce at least one second optical power in the at least one adaptive optical element, wherein the at least one second optical power is determined based on the gaze depth that is equal to or greater than the predefined threshold.

7. An adaptive viewing system (100) according to claim 6, wherein when adjusting the drive signal for the at least one adaptive element by applying the second drive signal transition, the at least one processor (108) is configured to:
select a second voltage transition function (F2) to transit from the at least one first optical power to the at least one second optical power within a second predefined time period; and
modify the drive signal according to the second voltage transition function, to generate the second drive signal transition.

8. An adaptive viewing system (100) according to claim 7, wherein the second predefined time period lies in a range of 100 milliseconds to 1 second.

9. An adaptive viewing system (100) according to any of the preceding claims, wherein the depth-sensing camera (106) is implemented as a front camera of an electronic device (116).

10. An adaptive viewing system (100) according to any of the preceding claims, wherein the depth-sensing camera (106) is arranged at a predefined distance from the user (114), the predefined distance being between 0.5 metres to 1.5 metres.

11. An adaptive viewing system (100) according to any of the preceding claims, wherein the eyewear (102) further comprises at least one fixed-power optical element (120a-b) providing a baseline optical power.

12. An adaptive viewing system (100) according to any of the preceding claims, further comprising an eye tracker (110a-b) arranged in the eyewear (102), wherein the at least one processor (108) is further configured to:
determine gaze directions of eyes of the user (114), based on eye tracking data collected by the eye tracker;
determine an optical depth at which the user is gazing, based on the gaze directions of the eyes of the user; and
selectively adjust the gaze depth (118), based on the determined optical depth.

13. An adaptive viewing system (100) according to claim 12, wherein when selectively adjusting the gaze depth (118), the at least one processor (108) is configured to prioritise the gaze depth determined based on the sensor data collected by the depth-sensing camera (106) over the optical depth determined using the eye tracking data.

14. A method for adaptive viewing, the method comprising:
determining a gaze depth (118) of a user (114) wearing an eyewear (102), based on sensor data collected by a depth-sensing camera (106), the eyewear having at least one adaptive optical element (104a-b);
detecting a first gaze depth transition, wherein the first gaze depth transition is detected when the gaze depth changes from being equal to or greater than a predefined threshold to being less than the predefined threshold;
adjusting a drive signal for the at least one adaptive optical element by applying a first drive signal transition when the first gaze depth transition is detected, for producing at least one first optical power in the at least one adaptive optical element, wherein the at least one first optical power is determined based on the gaze depth that is less than the predefined threshold; and
controlling the at least one adaptive optical element using its corresponding drive signal.

15. A method according to claim 14, wherein the step of adjusting the drive signal for the at least one adaptive element by applying the first drive signal transition comprises:
selecting a first voltage transition function (F1) to transit from at least one second optical power to the at least one first optical power within a first predefined time period, wherein the at least one second optical power is produced by the at least one adaptive optical element (104a-b) when the gaze depth (118) is equal to or greater than the predefined threshold; and
modifying the drive signal according to the first voltage transition function, for generating the first drive signal transition.

16. A method according to claim 14 or 15, further comprising:
detecting a second gaze depth transition, wherein the second gaze depth transition is detected when the gaze depth (118) changes from being less than the predefined threshold to being equal to or greater than the predefined threshold; and
adjusting the drive signal for the at least one adaptive optical element (104a-b) by applying a second drive signal transition when the second gaze depth transition is detected, for producing at least one second optical power in the at least one adaptive optical element, wherein the at least one second optical power is determined based on the gaze depth that is equal to or greater than the predefined threshold.
